Europäisches Patentamt

(19) European Patent Office

Office européen des brevets

(11) Publication number: **0 143 520**
**B1**

(12) **EUROPEAN PATENT SPECIFICATION**

(45) Date of publication of patent specification: **28.02.90**

(21) Application number: **84306160.7**

(22) Date of filing: **10.09.84**

(60) Divisional application **89305171.4 filed on 10/09/84.**

(51) Int. Cl.⁵: **B 65 D 90/48,** G 01 F 23/16, B 65 D 88/60

(54) Level indicator for liquid container with a follower.

(30) Priority: **01.12.83 US 557045**
**29.02.84 US 584744**

(43) Date of publication of application:
**05.06.85 Bulletin 85/23**

(45) Publication of the grant of the patent:
**28.02.90 Bulletin 90/09**

(84) Designated Contracting States:
**AT BE DE FR GB NL SE**

(56) References cited:
**DE-A-2 636 607**
**FR-A-1 541 092**
**FR-A-2 096 693**
**FR-A-2 142 320**
**US-A-1 893 162**

(73) Proprietor: **Fabricated Metals, Inc.**
**2401 Merced Street**
**San Leandro California 94577 (US)**

(72) Inventor: **Coleman, Clarence Buyer**
**5530 Fernhoff Road**
**Oakland California (US)**

(74) Representative: **Enskat, Michael Antony Frank**
**Michael A. Enskat & Co. 9, Rickmansworth Road**
**Watford Hertfordshire WD1 7HE (GB)**

Courier Press, Leamington Spa, England.

## Description

The present invention relates in general to bulk material container having a follower therein, and more particularly to a bulk material container having a follower therein and a material level indicator supported exteriorly thereof.

Fabricated Metals, Inc. of San Leandro, California, United States of America, has heretofore manufactured and sold a bulk material container having a material level follower disposed in the shell thereof. The vertical position of the material level follower varies with the level of the bulk material within the shell. A material level indicator is mounted exteriorly of the shell and comprises level indicating means with indicium. A cable is attached at one end to the material level follower. The other end of the cable is attached to an indicium marked counterweight that is received by the level indicating means. The location of the indicium on the counterweight relative to the indicium on the level indicating means provides a reading of the level of the material in the shell.

French Patent No. 2 142 320 (corresponding to US Patent No. 3,781,942) discloses a container shell for storing bulk material and having a vertical inner surface. A flexible follower assembly is disposed within the container shell to freely follow the height of the bulk material within the container. The follower is dimensioned to engage and wipe the inner vertical surface of the container shell.

The US Patent to Kleritj, No. 530,592, issued on December 11, 1894 for Magnetic Water Gauge, discloses a container for liquid. Mounted exteriorly of the container is a liquid level vessel which communicates with the container. The level of the liquid in the vessel follows the level of the liquid in the container. A float is disposed in the liquid level vessel to follow the height of the liquid in the vessel. A magnet is carried by the float. Exteriorly of the vessel and mounted thereon is a tube. Disposed within the tube in vertically spaced relation are electrical switches. The height of the magnet selectively operates a switch within the tube. Certain of the switches are connected to an electrical alarm circuit.

The U.S. Patent to Wilder et al., No. 3,942,526, issued on March 9, 1976 for Alarm System For Intravenous Infusion Procedure, discloses a drop chamber in which is disposed a magnetic float. The float level reflects the height of the liquid in a container communicating with the drop chamber. A proximity switch is attached to the exterior of the drop chamber. When the liquid in the container falls below a predetermined height, the magnet in the magnetic float activates the proximity switch to operate an alarm.

The U.S. Patent to Guest, No. 2,074,959, issued on March 23, 1937, for Fuel Tank Gauge, discloses a follower disposed on the surface of liquid contained in a tank. One end of a cable is attached to the follower. The opposite end of the cable is tensioned by attachment to an anchored spring.

Intermediate the ends thereof, the cable advances through a dial. Movement of the cable actuates an indicator of the dial to register the level of the liquid in the container.

In the U.S. Patent to Quist, No. 2,677,816, issued on May 4, 1954, for Floating Roof Tank Warning Device, there is disclosed a floating roof that follows the level of liquid in a storage tank. A vertically disposed liquid depth indicator is mounted exteriorly of the storage tank. One end of a cable is attached to a float mechanism incorporated in the floating roof. The other end of the cable is attached to a weight marker. Movement of the weight marker along the vertical indicator shows the level of the liquid in the container.

The U.S. Patent to Loeffler, No. 1,658,449, issued on February 7, 1928, for Fluid Level Indicator For high Pressure Vessels Or Containers, discloses a steam boiler and a liquid level gauge in communication with the steam boiler. The liquid level gauge is disposed exteriorly of the steam boiler. A float is disposed in a vessel of the liquid level gauge. One end of the cable is attached to the float. The other end of the cable is attached to a counterweight. Intermediate the ends thereof, the cable passes through a U-shaped tube. Surrounding the section of the U-shaped tube in the vicinity of the counterweight are magnetic coils. The counterweight is also a magnetic core for varying the magnetic fields produced by the magnetic coils. As the level of the float in the liquid level gauge varies, the magnetic fields produced by the coils will vary. A level indicator adjacent the magnetic coils will have the position of the indicator pointer thereof vary in response to variations in magnetic fields resulting from the varying position of the counterweight.

The U.S. Patent to Noyes et al., No. 4,290,059, issued on September 15, 1981, for Liquid Level Alarm For Remotely Indicating When Less Than A Predetermined Quantity of Fuel Oil Remains In A Storage Tank And Method Of Installing The Same, discloses a fuel storage tank and a fuel oil gauge. The gauge includes a tube. Within the tube is a magnetic disc attached to a rod. The rod extends into the storage tank and is mechanically actuated by a float disposed on the surface of the liquid in the storage tank. A magnetically actuated switch is mounted on the tube. When the level of the magnetic disc in the tube reaches a predetermined height, the magnetically actuated switch is operated to operate an alarm.

The U.S. Patent to Anderson, No. 3,159,301, issued on December 1, 1964, for Floating Diaphragm For Pressure Tanks, discloses a pressure tank with a floating diaphragm. A hollow buoyant float ring is mounted within the diaphragm. The float ring is formed from complementary half sections which are water-tight and fluid tight. The half sections are hinged together.

With respect to the prior art reflected by FR—A—2142320 which discloses a container for bulk material comprising a shell for storing bulk material, said shell being formed with a vertical inner surface, a follower disposed in said shell and dimensioned to engage the inner surface of said shell for wiping the inner surface of the bulk material in said shell, the present invention is characterised by a magnet mounted on said follower interiorly of said shell for movement therewith said magnet being spaced from the center of the follower and located adjacent a portion of the outer perimeter of the follower and means responsive to the magnetic field of said magnet and supported by said shell exteriorly of said shell, said means being activated by the magnetic field of said magnet when said follower moves to the approximate height of said means. Dependent claims concern particular embodiments of the invention.

A container for bulk materials embodying the present invention will now be described, by way of example, with reference to the accompanying drawings in which:

Figure 1 is an elevation view of the bulk material container embodying the present invention;

Figure 2 is an elevation view of the bulk material container shown in Figure 1 with a section thereof cut-away to illustrate the flexible follower, the magnet carried therewith, and the magnetic switch mounted exteriorly of the shell of the bulk material container;

Figure 3 is a plan view of the bulk material container shown in Figure 1;

Figure 4 is an enlarged fragmentary sectional view of the flexible follower to illustrate the magnet carried on the flexible follower and an enlarged illustration of the magnetic switch mounted with a diagrammatic illustration of an electrical circuit for indicating the height of the flexible follower;

Figure 5 is an elevation view of a modification of the bulk material container shown in Figures 1—3;

Figure 6 is a fragmentary elevation view of the modified bulk material container shown in Figure 5 with a section thereof cut-a-way to illustrate the floatable rigid follower, the magnet carried therewith, and the magnetic switch mounted exteriorly of the shell of the bulk material container.

Figure 7 is a horizontal sectional view of the modified bulk material container shown in Figure 5 taken along line 7—7 of Figure 5.

Figure 8 is an enlarged fragmentary vertical sectional view of the floatable rigid follower shown in Figures 5—7 taken along line 8—8 of Figure 7 illustrating the magnet carried on the floatable rigid follower and illustrating the magnetic switch mounted exteriorly of the shell of the bulk material container shown with a diagrammatic illustration of an electrical circuit for indicating the height of the floatable rigid follower.

Figure 9 is a plan view of the modified bulk material container shown in Figure 5.

Figure 10 is a vertical section taken along line 10—10 of Figure 9 to illustrate a locking ring for the modified bulk material container shown in Figure 5.

Figure 11 is an elevation view of the locking ring shown in Figure 10 taken along line 11—11 of Figure 9.

Figure 12 is a plan view of a modification of the bulk material container shown in Figures 5—9 in which the floatable rigid follower serves as a selectively positioned cover for the container.

Figure 13 is an enlarged fragmentary vertical sectional view of the positionable rigid follower for the modified bulk material container shown in Figure 12.

Detailed description of the preferred embodiments

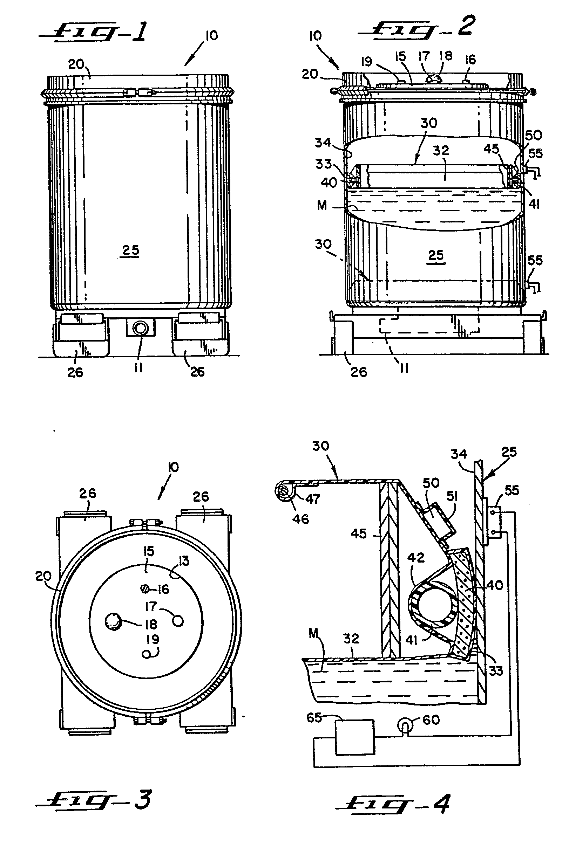

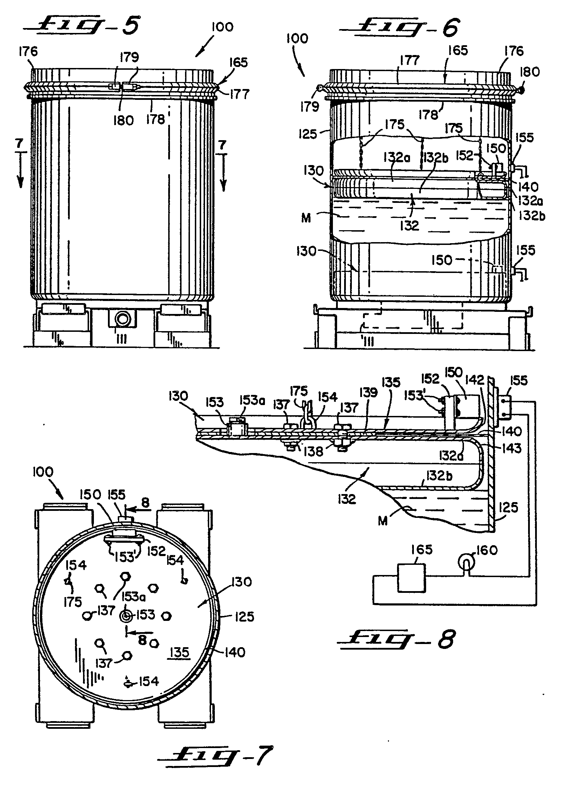

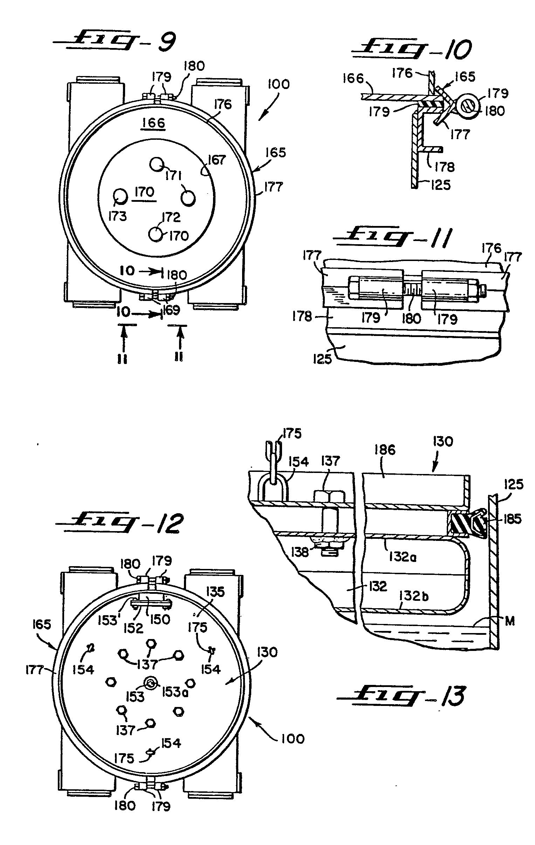

Illustrated in Figures 1—3 is a bulk material container 10 holding viscous material M (Figure 4) in the process of either being withdrawn or placed into a shell 25 of the container 10 through a conduit 11 (Figure 1) by means of a suitable pump assembly, not shown. In the preferred embodiment, the pump assembly is a sump pump. The shell 25 of the container 10 is provided with an access opening 13 (Figure 3) of conventional type and size. In a bulk material container, the access opening is generally large enough for an operator to pass through so as to be able to inspect, repair and clean the interior of the shell of the container. The access opening 13 receives a cover 15 made of suitable material, such as mild steel. The shell 25 of the container 10 may be made of suitable material, such as mild steel, stainless steel or aluminum. The top of the shell 25 of the container 10 is made of suitable material, such as mild steel.

Disposed in the cover 15 is a plug 16, a suitable vacuum vent valve 17, a suitable pressure relief valve 18, and a suitable opening 19 for supplying fluid under pressure. A stacking ring 20 encircles the shell 25 in the vicinity of the cover 15. At the bottom of the shell 25 of the container 10 are fork entry skids 26.

A flexible follower 30 (Figures 2 and 4) is disposed in the shell 25 of the container 10 and follows the level of the surface of the material M. It urges the material M into the pump assembly, not shown, via the conduit 11 during the draining of the material M from the shell 25 of the container 10. A flexible follower and shell generally of the type herein described is disclosed in detail in the U.S. Patent to Coleman, No. 3,781,942, issued on January 1, 1974, for Follower For Material Containers.

The flexible follower 30 comprises a diaphragm 32 made from a suitable fabric, such as neoprene coated nylon fabric. The diaphragm 32 is disposed coextensive with the transverse cross-section of the shell 25. The fabric for the diaphragm 32, in the preferred embodiment, is a liquid impervious material, which is flexible and is relatively thin and cloth-like. Neoprene coated material, such as canvas, is suitable for these purposes.

By employing a flexible follower, the follower can be folded to a collapsed form for removal from or entry into the shell 25 through the access opening 13 and can be expanded in the shell 25 to perform its intended functions. The diameter of the outermost wall 33 of the diaphragm 32 is dimensioned so as to engage substantially the inner surface 34 of the shell 25. Disposed along the outermost wall 33 of the diaphragm 32 and contained within the diaphragm 32 is an annular sponge 40.

While the exemplary embodiment makes reference to a sponge, it is apparent that other suitable material may be employed equally as well. The sponge 40 and the outermost wall 33 form a wiper for cleaning the inner surface 34 of the shell 25 as bulk material is withdrawn from the container 10.

Adjacent to the sponge 40 at the inboard side thereof is a stiffener, such as a tubular plastic ring 41, which serves to rigidify the circumferential portion of the diaphragm 32. An annular sleeve 42 made of suitable material, such as canvas, is fixed to the diaphragm 32 at the top and the bottom of the annular sponge 40 to retain the tubular plastic ring 41 in a fixed position relative to the diaphragm 32.

The sponge 40 is flexible and foldable so as to be contracted for removal from and insertion into the shell 25 through the access opening 13. The sponge 40 is expanded in the shell 25 for the cleaning of the inner surface 34 of the shell 25. The plastic ring 41 may be split for compression to facilitate its removal from and insertion into the shell 25 through the access opening 13. When expanded in the annular sleeve 42 within the shell 25, the ring 41 is suitable to provide a stiffener for the circumferential rim of the diaphragm 32.

Inboard of the sleeve 42 and disposed within the diaphragm 32 adjacent to the sleeve 42 is a suitable weight ring 45, made of metallic material such as mild steel. The weight ring 45 may be split for removal of and insertion into the shell 25 of the container 10 and for assembling in the diaphragm 32. After the weight ring 45 is inserted into the shell 25 and assembled in the diaphragm 32, the adjacent ends thereof at the split are secured together through a connecting plate fixed at one end and having an opening at the other end of the connected plate to receive a threaded stud to form a unitary structure for the weight ring 45. Thus, the weight ring 45 can be removed from and inserted into the shell 25 through the access opening 13 of the shell 25 of the container 10. When inserted into the diaphragm 32, the weight ring 45 is fully extended. Should it be desired to assure a complete and snug fitting of the wiper against the inner wall 34 of the shell 25, a turnbuckle, not shown, may be provided having adjustable threaded rods whose outer ends are secured in sockets, mounted respectively on the inner surfaces of the ring 45. A draw string 46 is provided within a seam welt 47.

Fixed to the outermost wall 33 of the diaphragm 32 is a suitable permanent magnet 50. In the exemplary embodiment, the magnet 50 is secured to the outermost wall 33 by a canvas strip 51, which is sewn onto the outermost wall 33 of the diaphragm 32. It is within the contemplation of the present invention to secure a plurality of magnets 50 on the outermost wall 33 of the diaphragm 32. The plurality of magnets 50 will assume close proximity to the shell 25 in the event the follower 30 develops a slight convex or concave configuration in its up or down movement. In the exemplary embodiment, the magnets 50 have a pull of approximately 120 pounds.

Mounted on the outer wall of the shell 25 is suitable means responsive to a magnetic field, such as a magnetic switch 55. The switch 55 can be fixed to the shell 25 or can be detachably secured to the shell 25. The height of the switch 55 can be selected dependent on the material level indicator function. The height of the switch can be selected to indicate when the level of the material M in the shell 25 of the container 10 has dropped to a point requiring refilling or the replacement by a filled bulk material container or when the level of the material M in the shell 25 of the container 10 has reached a height requiring the cessation of the filling operation. The switch 55 can be moved vertically to determine the location of the height of the material M in the shell 25 of the container 10.

In the event the shell 25 of the container 10 is made of material other than aluminum or stainless steel, such as mild steel, then the section of the shell 25 of the container 10 at which one or more of the magnetic switches 55 is located will be removed and replaced with a strip of material, such as stainless steel or aluminum. The replacement of the removed section of the shell 25 of the container 10 with a strip such as aluminum or stainless stell can be carried out by welding or any suitable means. More specifically, material that provides a path for the passage of a magnetic field or magnetic flux need not have a strip inserted into the shell 25. On the other hand material that does not provide a suitable path for the passage of a magnetic field or magnetic flux does require the inserted strip.

Connected to each of the magnetic switches 55 is a suitable level indicator 60 (Figure 4) such as a light or an alarm, or a relay to activate a level indicator, or a solenoid valve. In the exemplary embodiment, a suitable source of power 65 is connected in series with the magnetic switch 55 and the level indicator 60.

In operation, the movement of the follower 30 to a predetermined height moves the magnet 50 at a level to activate the magnetic switch 55. The activation of the magnetic switch operates the level indicator 60.

Illustrated in Figures 5 and 6 is a modified bulk material container 100 holding viscous material M (Figures 6 and 8) in the process of either being withdrawn or placed into a shell 125 of the container 100 through a conduit 111 (Figure 5) by means of a suitable pump assembly, not shown. In the preferred embodiment, the pump assembly is an exterior pump. The shell 125 of the container 100 may be made of suitable material, such as plastic, mild steel, stainless steel or aluminum.

A rigid follower 130 (Figures 6—8) is disposed in the shell 125 of the container 100 and follows the level of the surface of the material M. The floatable rigid follower 130 comprises a buoyant, hollow cylindrical body 132 with contiguous half sections 132a and 132b. The body 132, in the preferred embodiment, is made of plastic, aluminum or stainless steel. The outer diameter of the body 132 is slightly less than the inner diameter of the shell 125. The rigid follower 130 also comprises a dish-shaped plate 135, which in the preferred embodiment, is made of aluminum or stainless steel. The plate 135 has a diameter substantially equal to the diameter of the body 132. While the follower 130, in the exemplary embodiment, has a cylindrical configuration, it is apparent that the follower can have other suitable configurations conforming to the cross-sectional contour of the shell.

Disposed between the body 132 and the plate 135 is a flexible, annular wiper 140 (Figures 6 and 8) made of suitable material, such as neoprene or rubber. A cylindrical spacer 139 (Figure 8) is disposed in the opening of the annular wiper 140 for reducing distortion at the outer edge of the wiper 140. The wiper 140 is secured between the body 132 and the plate 135 by means of bolts 137 and nuts 138 arranged in a circle with spacer 139. The wiper 140 is held by the rigid follower 130 so as not to distort the outer edge thereof. The bolts 137 extend through the plate 135, through the spacer 139 and into the section 132a of the body 132. Preferably, the nuts 138 are welded to the section 132a at the inner wall thereof and the heads of the bolts 137 are secured against the plate 135. The thickness of the spacer 139 and the wiper 140 are such than when the bolts 137 and the nuts 138 secure the plate 135 and the section 132a of the body 132 together in a tight fitting relation, the wiper 140 is disposed between the plate 135 and the body 132. After the bolts 137 and the nuts 138 are installed, the section 132b of the body 132 is secured in fluid tight relation with the section 132a by suitable means, such as welding.

The wiper 140 extends radially outwardly from the body 132 and the plate 135 for engaging the inner wall of the shell 125 in a wiping action. Confronting walls 142 and 143 (Figure 8) of the dish-shaped plate 135 and the section 132a, respectively, are curved along the periphery thereof. The wall 142 is curved upwardly and outwardly at the perimeter thereof. The perimeter of the wiper 140 extends between but radially outwardly of the curved portions of the walls 142 and 143. The wiper 140 along its perimeter is guided and restrained in its yieldable action by the contour of the perimeters of the walls 142 and 143 during the wiping action thereof against the inner wall of the shell 125.

Fixed to the top wall of the plate 135 is a suitable permanent magnet 150 (Figures 6—8). In the exemplary embodiment, the magnet 150 is secured to the top wall of the plate 135 by means of a block 152 that is secured to the top wall of the plate 135 by suitable means, such as a weldment. Nuts and bolts 153' secure the magnet 150 to the block 152. In the exemplary embodiment, the magnet 150 has an approximate pull of 120 pounds. Mounted in the top wall of the plate 135 at the axial center thereof is a suitable coupling 153 with a plug 153a (Figures 7 and 8). Should it be desired to fill the body 132 with a gas or the like, the coupling 153 will provide the connection for the supply of gas or liquid. After the body 132 is filled with the gas, the coupling 153 is disconnected and the opening is sealed with plug 153a. Spaced radially outward from the coupling 153 at equiangular distances apart are U-shaped bolts 154. The bolts 154 are secured to the plate 135 by weldments.

Mounted on the outer wall of the shell 125 is suitable means responsive to a magnetic field, such as a magnetic switch 155 (Figures 6—8). The switch 155 can be fixed to the shell 125 or can be detachably secured to the shell 125. The height of the switch 155 can be selected dependent on the material level indicator function. The height of the switch 155 can be selected to indicate when the level of the material M in the shell 125 of the container 100 has dropped to a point requiring refilling or the replacement by a fill bulk material container or when the level of the material M in the shell 125 of the container 100 has reached a height requiring the cessation of the filling operation. The switch 155 can be moved vertically to determine the location of the height of the material M in the shell 125 of the container 100.

Connected to each of the magnetic switches 155 is a suitable level indicator 160 (Figure 8) such as a light or an alarm, or a relay to activate a level indicator, or a solenoid valve. In the exemplary embodiment, a suitable source of power 165 is connected in series with the magnetic switch 155 and the level indicator 160. It is within the contemplation of the present invention that the magnetic switches 155 can be in the form of a magnetic activated device that indicates level, such as a magnetically actuated flag.

A removable stacking ring 176 (Figures 5, 6, 9 and 10) encircles the shell 125 and is attached to a removable top plate 166. A locking ring 165 (Figures 5, 6 and 9—11) secures the top plate 166 to the upper section of the shell 125. Formed in the top plate 166 is an access opening 167 (Figure 5), which is of conventional size and type.

The access opening 167 of the container 100 receives a cover 170 made of suitable material, such as mild steel. Formed in the cover 170 are openings for air ventilation plugs 171, for a vacuum relief valve 172 and for a pressure relief valve 173. In order to install the floatable rigid follower 130 into the shell 125 and to remove the rigid follower 130 from the shell 125, the top plate 166 along with the stacking ring 176 are removed from the shell 125. To raise and lower the floatable rigid follower 130 manually relative to the shell 125, chains 175 (Figures 6 and 8) are attached at one end to the U-bolts 154. At the other end, the chains 175 are detachably secured in a well-known manner to the bottom wall of the top plate 166. The length of the chains 175 is sufficient to permit the rigid follower 130 to be lowered within the shell 125 to the fullest extent.

The locking ring 165 (Figures 5, 6, and 9—11) comprises a split ring 177. Projecting from the confronting ends of the split ring 177 are ears 179. Received by each pair of confronting ears 179 is a threaded bolt 180. Suitable nuts threaded on the associated bolt 180 for each pair of confronting ears 179 hold the split ring 179 in a locked state. The locking ring 165, when in a locked state, holds the top plate 166 secured to a flange 178 (Figure 10), which is welded to the top of the shell 125. An annular gasket 179 is disposed between the top plate 166 and the flange 178. For removing the top plate 166 from the shell 125, the nuts are removed from the associated bolts 180 and the bolts 180 are removed from the associated ears 179. Thereupon, the split ring 177 is removed from the top plate 166 and the flange 178.

The floatable rigid follower 130 may, in the alternative, be employed as a positionable cover for the shell 125 (Figures 12 and 13). To employ the floatable rigid follower 130 as a positionable cover for the shell 125, an annular inflatable seal 185 is secured between the plate 186 and the floatable body 132 in lieu of the wiper 140. The inflatable seal 185 is a conventional and well-known seal manufactured by Kirkhill Rubber Co. of Los Angeles, California, U.S.A., as catalogue number F-13763.

When the inflatable seal 185 is in a deflated state (Figure 13), the floatable rigid follower 130 is in constant contact with the surface of the bulk material M and follows the level of the bulk material M in the shell 125. When the inflatable seal 185 is inflated by a suitable gas, such as air, the seal 185 engages the wall of the shell 125 and the rigid follower 130 remains at an adjustable height within the shell 125. The capacity of the container 100 is then determined by the height of the rigid follower 130 within the shell 125.

The replacement of the wiper 140 by the inflatable seal 185 enables the rigid follower 130 to be used as a cover in place of a top plate, such as top plate 166, or can be used in addition to a top plate. The height of the rigid follower 130 varies with the height of the level of the bulk material M in the shell 125, when the seal 185 is deflated. The height of the rigid follower 130 remains at an adjustable height when the seal 185 is inflated to set the fixed storage capacity for the container 100.

## Claims

1. A container (10, 100) for bulk material (M) comprising:

a) a shell (25, 125) for storing bulk material (M), said shell (25, 125) being formed with a vertical inner surface (34);

b) a follower (30, 130) disposed in said shell (25, 125) and dimensioned to engage the inner surface (34) of said shell (25, 125) for wiping the inner surface (34) of the bulk material (M) in said shell (25, 125) characterised by

c) a magnet (50, 150) mounted on said follower (30, 130) interiorly of said shell (25, 125) for movement therewith said magnet being spaced from the centre of the follower and located adjacent a portion of the outer perimeter of the follower; and

d) means (55, 155) responsive to the magnetic field of said magnet (50, 150) and supported by said shell (25, 125) exteriorly of said shell (25, 125), said means (55, 155) being activated by the magnetic field of said magnet (50, 150) when said follower (30, 130) moves to the approximate height of said means (55, 155).

2. A container (10, 100) as claimed in Claim 1 characterised in that at least a vertical section of the vertical wall of said shell forming said inner surface (34) is made of material suitable for the passage of a magnetic field, and wherein said means (55, 155) responsive to a magnetic field of said magnet (50, 150) is disposed adjacent said material of said wall suitable for the passage of a magnetic field.

3. A container (10, 100) as claimed in Claim 2 characterised in that said shell (25, 125) is made of material unsuitable for the passage of a magnetic field, and said magnet (50, 150) is arranged to travel adjacent said vertical section in its movement with said follower (30, 130) to a preselected location.

4. A container (10) as claimed in any preceding claim characterised in that said follower (30) is a flexible follower, said follower comprising:

a) a diaphragm (32) of flexible material dimensioned to engage said inner surface (34),

b) stiffener means (41) on said diaphragm (32) to urge said diaphragm (32) in engagement with said inner surface (34), and

c) wiper means (40, 33) on said diaphragm (30) along the perimeter thereof for wiping said inner surface (34),

d) said magnet (50) being mounted on said diaphragm (32) adjacent said wiper means (40, 33).

5. A container (100) for bulk material (M) as claimed in Claim 1 characterised in that said follower (150) is a rigid, floatable follower (130) disposed in constant contact with the upper surface of the bulk material (M) stored in said shell (125), said follower (13) comprising rigid sections (132, 135) in axial alignment and a yieldable member (140) secured between said rigid sections (132, 135) in axial alignment with a yieldable member (140) secured between said rigid sections (132, 135) for engaging the inner surface of said shell (125).

6. A container (100) for bulk material (M) as claimed in Claim 5 characterised in that said yieldable member (140) is a wiper (140) for wiping the inner surface of said shell (125) as bulk material (M) is removed from said shell (125).

7. A container (100) as claimed in Claim 6 characterised in that said rigid sections (132, 135) are in the form of a hollow body (132) and a plate (135) between which said wiper (140) is secured.

8. A container (100) as claimed in Claim 5 characterised in that one (132) of said rigid sections (132, 135) is buoyant.

9. A container (100) as claimed in Claim 6 characterised in that said sections (132, 135) are formed with confronting walls (142, 143) curved at the perimeters thereof in opposite directions and wherein said wiper (140) is disposed between said walls (142, 143) for guiding the flexing action of said wiper (140) at the perimeter thereof during the wiping of said inner surface of said shell (125).

10. A container (100) as claimed in Claim 7 characterised in that said plate (135) is disposed above said body (132) and is curved upwardly and outwardly at the perimeter thereof and wherein said body (132) is formed with an upper wall (143) confronting said plate (132), said upper wall (143) being curved downwardly and outwardly at the perimeter thereof, said wiper (140) being disposed between said walls (142, 143) and projecting radially outwardly therefrom, said wiper (140) being restrained by said walls (142, 143) at the perimeter thereof during the wiping of the inner surface of said shell (125).

11. A container (100) as claimed in Claim 6 characterised in that said rigid sections (132, 135) are secured together by fastening means (137, 138) and wherein said wiper (140) has an annular configuration and wherein said wiper (140) is secured between said rigid sections (132, 135) outwardly from the location of said fastening means (137, 138).

12. A container (100) as claimed in Claim 11 characterised by a spacer member (139) disposed in the axial opening of said annular wiper (140) between said rigid sections (132, 135).

13. A container (100) as claimed in Claim 5 characterised in that said yieldable member (185) is an inflatable seal (185), said rigid, floating follower (130) being disposed in constant contact with the upper surface of the bulk material (M) stored in said shell (125) when said inflatable seal (185) is in a deflated state and said floating follower (130) being disposed in a fixed position in said shell (125) when said inflatable seal (185) is in an inflated state.

**Patentansprüche**

1. Behälter (10, 100) für eine fließfähige Masse (M):

a) mit einem Gehäuse (25, 125), um die fließfähige Masse (M) aufzubewahren, wobei das Gehäuse (25, 125) mit einer vertikalen inneren Oberflächen (34) versehen ist;

b) mit einem Folgestab (30, 130), der in dem Gehäuse (25, 125) angeordnet und derart dimensioniert ist, daß er in die innere Oberfläche (34) des Gehäuses (25, 125) eingreift, um die innere Oberfläche (34) von der fließfähigen Masse (M) in dem Gehäuse (25, 125) freizuwischen, gekennzeichnet durch

c) einen Magneten (50, 150), der auf dem Folgestab (30, 130) innerhalb des Gehäuses (25, 125) zur Bewegung mit diesem angeordnet ist, wobei der Magnet von dem Zentrum des Folgestabes entfernt und an einen Abschnitt der äußeren Umkreisoberfläche des Folgestabes angrenzend angeordnet ist; und

d) für das Magnetfeld des Magneten (50, 150) empfindliche Mittel (55, 155), die von dem Gehäuse (25, 125) außerhalb des Gehäuses (25, 125) getragen werden, wobei diese Mittel (55, 155) durch das Magnetfeld des Magneten (50, 150) aktiviert werden, wenn sich der Folgestab (30, 130) zur ungefähren Höhe der Mittel (55, 155) bewegt.

2. Behälter (10, 100) nach Anspruch 1, dadurch gekennzeichnet, daß wenigstens ein vertikaler Abschnitt der vertikalen Wand des Gehäuses, der die innere Oberfläche (34) bildet, aus einem Material hergestellt ist, das zum Durchlassen eines Magnetfeldes geeignet ist, und bei dem die für das Magnetfeld des Magneten (50, 150) empfindlichen Mittel (55, 155) an das zum Passieren des Magnetfeldes geeignete Material der Wand angrenzen.

3. Behälter (10, 100) nach Anspruch 2, dadurch gekennzeichnet, daß das Gehäuse (25, 125) aus einem zum Durchlassen des Magnetfeldes ungeeigneten Material hergestellt ist, und daß der Magnet (50, 150) so angeordnet ist, daß er in seiner Bewegung an dem vertikalen Abschnitt angrenzend sich mit dem Folgestab (30, 130) zu einer vorbestimmten Position hinbewegt.

4. Behälter (10) nach einem der vorstehenden Ansprüche, dadurch gekennzeichnet, daß der Folgestab (30) ein biegsamer Folgestab ist, der folgendes umfaßt:

a) eine Membran (32) aus einem biegsamen Material, derart dimensioniert, daß sie in die innere Oberfläche (34) eingreift,

b) Versteifungsmittel (41) auf der Membran (32), um die Membran (32) in den Eingriff mit der inneren Oberfläche (34) zu bringen, und

c) Wischermittel (40, 33) entlang dem Umkreis der Membran (30), um die innere Oberfläche (34) abzuwischen,

d) wobei der Magnet (50) angrenzend an die Wischermittel (40, 33) auf der Membran (32) angeordnet ist.

5. Behälter (100) für eine fließfähige Masse (M) nach Anspruch 1, dadurch gekennzeichnet, daß der Folgestab (130) ein starrer, schwimmender Folgestab (130) ist, der in dauerndem Kontakt mit der oberen Oberfläche der fließfähigen Masse (M) steht, die in dem Gehäuse (125) aufbewahrt wird, wobei der Folgestab (13) starre Abschnitte (132, 135) in axialer Ausrichtung mit einem nachgebenden Element (140) umfaßt, das zwischen den starren Abschnitten (132, 135) befestigt ist, um in die innere Oberfläche des Gehäuses (125) einzugreifen.

6. Behälter (100) für eine fließfähige Masse (M) nach Anspruch 5, dadurch gekennzeichnet, daß das nachgebende Element (140) ein Wischer (140) ist, um die innere Oberfläche des Gehäuses (125) zu wischen, wie fließfähige Masse (M) von dem Gehäuse (125) entfernt wird.

7. Behälter (100) nach Anspruch 6, dadurch gekennzeichnet, daß die starren Abschnitte (132, 135) als ein hohler Körper (132) und eine Scheibe (135) ausgestaltet sind, zwischen denen der Wischer (140) befestigt ist.

8. Behälter (100) nach Anspruch 5, dadurch gekennzeichnet, daß einer (132) der starren Abschnitte (132, 135) schwimmfähig ist.

9. Behälter (100) nach Anspruch 6, dadurch gekennzeichnet, daß die Abschnitte (132, 135) mit gegenüberstehenden Wänden (142, 143) gestaltet sind, die an ihren jeweiligen Umkreisen in ineinander gegenüberliegenden Richtungen gekrümmt sind und wobei der Wischer (140) zwischen den Wänden (142, 143) angeordnet ist, um die biegsame Betätigung des Wischers (140) an seinem Außenumfang während des Wischens der inneren Oberfläche des Gehäuses (125) zu führen.

10. Behälter (100) nach Anspruch 7, dadurch gekennzeichnet, daß die Scheibe (135) oberhalb des Körpers (132) angeordnet und nach oben und nach außen an ihrem Umfang gebogen ist, und daß der Körper (132) mit einer oberen Wand geformt (143) ist, die der Scheibe (132) gegenüberliegt, wobei die obere Wand (143) nach unten und nach außen in Richtung ihres Umfanges gebogen ist, daß der Wischer (140) zwischen den besagten Wänden (142, 143) angeordnet ist und sich radial nach außen erstreckt, wobei der Wischer (140) durch die Wände (142, 143) an deren Umkreis während des Wischens an der inneren Oberfläche des Gehäuses (125) zwangsgeführt wird.

11. Behälter (100) nach Anspruch 6, dadurch gekennzeichnet, daß die starren Abschnitte (132, 135) durch Haltemittel (137, 138) fest miteinander verbunden sind und daß der Wischer (140) eine ringförmige Gestalt aufweist und zwischen den starren Abschnitten (132, 135) von der Position der Haltemittel (137, 138) gesehen nach außen weisend befestigt ist.

12. Behälter (100) nach Anspruch 11, gekennzeichnet durch ein Abstandselement (139), das in der axialen Öffnung des besagten ringförmigen Wischers (140) zwischen den starren Abschnitten (132, 135) angeordnet ist.

13. Behälter (100) nach Anspruch 5, dadurch gekennzeichnet, daß das nachgebende Element (185) eine aufblasbare Dichtung (185) ist, daß der starre, schwimmende Folgestab (130) in dauerndem Kontakt mit der oberen Oberfläche der fließfähigen Masse (M) steht, die in dem Gehäuse (125) aufbewahrt wird, wenn die aufblasbare Dichtung (185) in einem abgeblasenen Zustand ist, und daß der schwimmende Folgestab (130) in einer festen Position in dem Gehäuse (125) angeordnet ist, wenn die aufblasbare Dichtung (185) in ihrem aufgeblasenen Zustand ist.

**Revendications**

1. Conteneur (10, 100) pour matières en vrac (M) comprenant:

a) une enveloppe (25, 125) pour contenir la matière en vrac (M), cette enveloppe (25, 125) étant formée avec une surface intérieure verticale (34),

b) un organe suiveur (30, 130) disposé dans ladite enveloppe (25, 125) et dimensionné pour s'engager avec la surface intérieure (34) de cette enveloppe (25, 125) afin d'enlever la matière en vrac (M) de la surface intérieure (34) à l'intérieur de l'enveloppe (25, 125), caractérisé par:

c) un aimant (50, 150) monté sur ledit organe suiveur (30, 130) à l'intérieur de l'enveloppe (25, 125) pour se déplacer avec lui, cet aimant étant espacé du centre de l'organe suiveur et logé au voisinage d'une partie du périmètre extérieur de cet organe suiveur, et

d) un moyen (55, 155) sensible au champ magnétique de cet aimant (50, 150) et supporté par l'enveloppe (25, 125) à l'extérieur de celle-ci, ce moyen (55, 155) étant activé par le champ magnétique de l'aimant (50, 150) quand l'organe suiveur (30, 130) se déplace jusqu'au niveau approximatif de ce moyen (55, 155).

2. Conteneur (10, 100) selon la revendication 1, caractérisé en ce qu'une partie verticale au moins de la paroi verticale de l'enveloppe constituant la surface intérieure (34) est faite de matière appropriée au passage du champ magnétique et dans lequel ledit moyen (55, 155) sensible au champ magnétique de l'aimant (50, 150) est disposé au voisinage de cette matière de ladite paroi appropriée au passage d'un champ magnétique.

3. Conteneur (10, 100) selon la revendication 2, caractérisé en ce que l'enveloppe (25, 125) est réalisée en matière inadaptée au passage d'un champ magnétique et ledit aimant (50, 150) est disposé pour se déplacer au voisinage de ladite partie verticale pendant son mouvement avec l'organe suiveur (30, 130) jusqu'à un endroit présélectionné.

4. Conteneur (10) selon l'une quelconque des revendications précédentes, caractérisé en ce que l'organe suiveur (30) est un organe flexible, cet organe comprenant:

a) une membrane (32) de matière flexible, dimensionnée pour s'engager avec la surface intérieure (34),

b) un moyen de raidissement (41) monté sur ladite membrane (32) pour pousser celle-ci en engagement avec ladite surface intérieure (34) et

c) un moyen racleur (40, 33) monté sur cette membrane (30) le long de son périmètre pour racler ladite surface intérieure (34),

d) l'aimant (50) étant monté sur la membrane (32) au voisinage de ce moyen racleur (40, 33).

5. Conteneur (100) pour matière en vrac (M) selon la revendication 1, caractérisé en ce que l'organe suiveur (130) est un organe suiveur rigide, flottant (130), disposé en contact constant avec la surface supérieure de la matière en vrac (M) contenue dans l'enveloppe (125), cet organe suiveur (130) comprenant des parties rigides (132, 135) en alignement axial et un élément souple (140) fixé entre ces parties rigides (130, 132) pour s'engager avec la surface intérieure de l'enveloppe (125).

6. Conteneur (100) pour matière en vrac (M) selon la revendication 5, caractérisé en ce que l'élément souple (140) est un racler (140) pour racler la surface intérieure de l'enveloppe (125) à mesure que de la matière en vrac (M) est retirée de ladite enveloppe (125).

7. Conteneur (100) selon la revendication 6, caractérisé en ce que lesdites parties rigides (132, 135) sont sous forme d'un corps creux (132) et d'une plaque (135) entre lesquels ledit racleur (140) est fixé.

8. Conteneur (100) selon la revendication 5, caractérisé en ce que l'une (132) desdites parties rigides (132, 135) est flottante.

9. Conteneur (100) selon la revendication 6, caractérisé en ce que lesdites parties (132, 135) sont formées avec des parois de front (142, 143) incurvées à leur périmètre dans des directions opposées et dans lequel le racleur (140) est disposé entre ces parois (142, 143) pour guider l'action de flexion du racleur (140) à son périmètre pendant le raclage de la surface intérieure de l'enveloppe (125).

10. Conteneur (100) selon la revendication 7, caractérisé en ce que ladite plaque (135) est disposée au-dessus du corps (132) et elle incurvée vers le haut et vers l'extérieur à son périmètre et dans lequel ledit corps (132) est formé avec une paroi supérieure (143) placée de front par rapport à ladite plaque (132) et cette paroi supérieure (143) étant incurvée vers le bas vers l'extérieur à son périmètre, le racleur (140) étant disposé entre lesdites parois (142, 143) et se projetant dans le sens radial vers l'extérieur à partir de ces dernières, ce racleur (140) étant restreint par lesdites parois (142, 143) à son périmètre pendant le raclage de la surface intérieure de l'enveloppe (125).

11. Conteneur (100) selon la revendication 6, caractérisé en ce que les parties rigides (132, 135) sont fixées ensemble par des moyens de fixation (137, 138) et dans lequel le racleur (140) a une configuration annulaire et dans lequel le racleur (140) est fixé entre lesdites parties rigides (132, 135) extérieurement à l'emplacement desdits moyens de fixation (137, 138).

12. Conteneur (100) selon la revendication 11, caractérisé par un élément d'espacement (139) disposé dans l'ouverture axiale du racleur annulaire (140) entre les parties rigides (132, 135).

13. Conteneur (100) selon la revendication 5, caractérisé en ce que ledit élément souple (185) est un joint gonflable (815), l'organe suiveur rigide flottant (130) étant disposé en contact constant avec la surface supérieure de la matière en vrac (M) contenue dans l'enveloppe (125) lorsque le joint gonflable (185) est à l'état dégonflé et cet organe suiveur flottant (130) étant disposé à une position fixe dans l'enveloppe (125) quand le joint gonflable (185) est à l'état gonflé.

fig-5

fig-6

fig-7

fig-8

_fig_-9

_fig_-10

_fig_-11

_fig_-12

_fig_-13